# FASCICULE DE BREVET EUROPEEN

(11) **EP 0 403 334 B1**
(45) Date de publication et mention de la délivrance du brevet: **22.09.1993**
(21) Numéro de dépôt: 90401534.4
(22) Date de dépôt: 06.06.1990
(51) Int. Cl.: B60R 13/02, B29C 45/14

(54) **Procédé de formation d'un joint d'étanchéité sur une pièce de carrosserie en matière synthétique**
Verfahren zur Bildung einer Dichtung auf einem Karosserieteil aus Kunststoff
Method of forming a sealing joint upon a synthetic car body part

(30) Priorité: 16.06.1989 FR 8908057
(43) Date de publication de la demande: 19.12.1990
(73) Titulaire: HUTCHINSON, F-75008 Paris (FR)
(72) Inventeur: Nivert, Chantal, F-86140 Lencloître (FR)
(74) Mandataire: Ramey, Daniel

(56) Documents cités:
- GB-A- 2 178 692
- PATENT ABSTRACTS OF JAPAN, vol. 10, no. 77 (M-464)(2134), 26 mars 1986

## Description

L'invention concerne un procédé de formation d'un joint d'étanchéité sur une pièce de carrosserie en matière synthétique.

La formation de joints d'étanchéité sur des pièces ayant des formes plus ou moins complexes, telles que les pièces de carrosserie, pose souvent des problèmes. Le joint peut en effet être, par exemple, fabriqué par extrusion et ensuite rapporté sur la pièce et fixé par collage. Toutefois, la fabrication du joint par extrusion interdit de donner à ce joint une forme et/ou une section évolutive, la fixation du joint par collage est loin d'être parfaite ou même satisfaisante, et la pose du joint sur des parties de la pièce présentant des angles vifs ne donne pas non plus de résultats satisfaisants, le joint s'écartant plus ou moins de la partie de la pièce qu'il est censé recouvrir.

En pratique, on tente d'apporter une solution à ces problèmes en posant des tronçons de joint sur la pièce, ces tronçons de joint se rejoignant au niveau des angles vifs ou des changements de plans. Toutefois, l'étanchéité dans ces zones est alors à peu près inexistante.

En outre, le joint d'étanchéité est le plus souvent fixé de façon imparfaite à la pièce de carrosserie, notamment dans le cas du collage, de sorte que le joint et la pièce de carrosserie répondent de façon différente aux sollicitations thermiques et mécaniques, le joint ayant souvent tendance à onduler par rapport à la surface de la pièce de carrosserie.

Une solution à ce problème pourrait consister à réaliser le joint en polymère thermoplastique ou en caoutchouc vulcanisable, qui serait directement surmoulé sur la pièce de carrosserie. On connait, par le document JP-A-60-219118, une pièce de carrosserie en résine composite bois-chlorure de vinyle qui est formée d'une pièce avec un joint d'étanchéité en chlorure de vinyle. Toutefois, les thermoplastiques et les caoutchoucs vulcanisables doivent être injectés sous pression très élevée (plusieurs centaines de bars) et à des températures élevées, la polymérisation ou la vulcanisation ayant lieu très rapidement. Ces conditions opératoires rendent à peu près impossible de surmouler un joint en caoutchouc vulcanisable sur une pièce de carrosserie lorsque le joint a une longueur relativement importante. De plus, lorsque la pièce de carrosserie est en matière synthétique, elle risque de souffrir de la température élevée d'injection du thermoplastique ou du caoutchouc vulcanisable.

L'invention a pour but d'apporter une solution simple et efficace à ces problèmes, dans le cas où les pièces de carrosserie sont en matière synthétique.

Elle a pour objet un procédé permettant de former sur une pièce de carrosserie en matière synthétique, un joint d'étanchéité qui est fixé à la pièce de carrosserie sur toute sa surface de contact avec celle-ci, de façon à répondre aux sollicitations thermiques et mécaniques sensiblement de la même façon que la pièce de carrosserie.

Elle a encore pour objet un procédé de ce type, grâce auquel le joint peut jouer le rôle d'un élément intermédiaire, notamment pour le montage de la pièce de carrosserie sur une autre pièce, ou pour le montage d'une autre pièce sur une pièce de carrosserie.

L'invention a encore pour objet un procédé de ce type qui permette de réaliser un joint de bonne qualité sur la pièce, de façon rapide et appropriée à la réalisation de séries importantes.

L'invention propose à cet effet un procédé de formation d'un joint d'étanchéité sur une pièce de carrosserie en matière synthétique, caractérisé en ce qu'il consiste à surmouler un joint en une matière polymérisable telle qu'un polyuréthane ou une polyurée sur la pièce de carrosserie et à polymériser la matière du joint au contact de la pièce de carrosserie pour fixer le joint sur cette pièce par liaison ou affinité chimique de leurs matières constitutives.

Avantageusement, le joint est surmoulé sur la pièce de carrosserie par le procédé RIM.

Avantageusement, la pièce de carrosserie est également en matière polymère moulable par procédé RIM. Dans ces conditions, le joint peut recouvrir de façon continue un bord de la pièce qui présente des changements de plan et/ou des changements de direction à angles vifs, ou bien peut recouvrir une surface de la pièce, qui présente également des changements de plan à angles vifs.

Selon une autre caractéristique de l'invention, le joint est à forme et/ou à section évolutive.

L'invention est applicable à de nombreuses pièces de carrosserie telles que des bavolets munis de joints d'étanchéité coopérant avec la caisse d'un véhicule, des ailerons munis de joints de montage sur une pièce de carrosserie, des ailes munies de joints de montage d'un écran de roues, des portières munies d'un joint d'étanchéité surmoulé, des couvercles de coffres, etc...

L'invention sera mieux comprise et d'autres détails, caractéristiques et avantages de celle-ci apparaîtront plus clairement à la lecture de la description qui suit, faite à titre d'exemple en référence aux dessins annexés dans lesquels :
la figure 1 est une vue schématique en élévation d'un bavolet pour véhicule automobile ;
les figures 2 et 3 sont des vues en coupe, à plus grande échelle, selon les lignes II-II et III-III de la figure 1 ;
la figure 4 est une vue partielle en perspective, à plus grande échelle, d'une partie de pièce de carrosserie, dont un bord doit être muni d'un joint d'étanchéité.

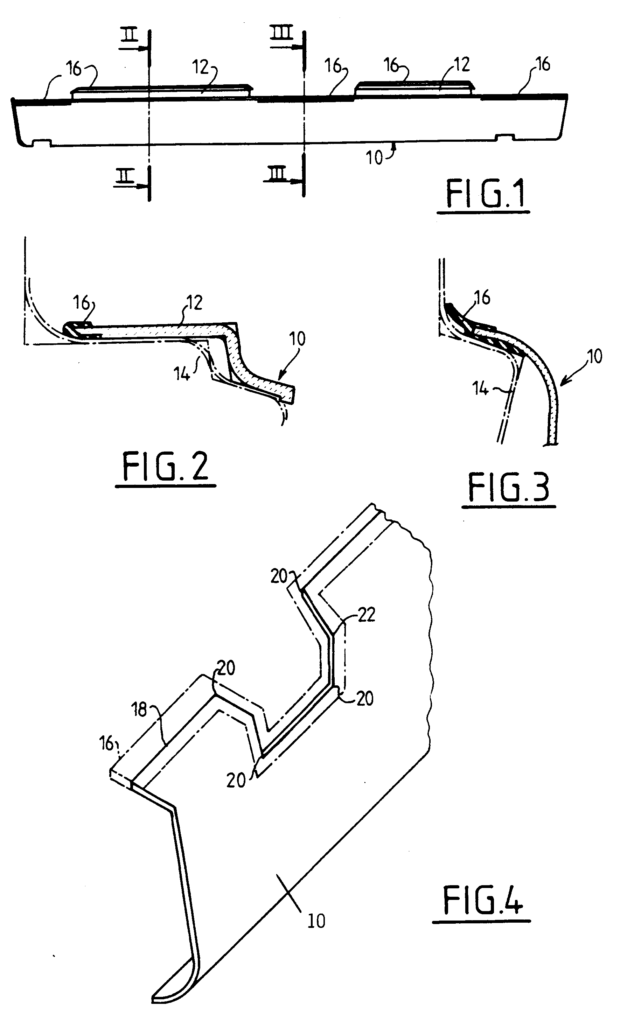

La pièce de carrosserie représentée dans les figures 1 à 3 est un bavolet, ayant une longueur d'environ 2 mètres et qui est destiné à être monté sur la caisse d'un véhicule automobile, immédiatement en dessous du bord inférieur des portières.

Cette pièce 10 comprend sur son bord supérieur deux prolongements incurvés 12 destinés à venir recouvrir la caisse vers l'intérieur du véhicule, au niveau des portières avant et arrière.

Une telle pièce de carrosserie a une forme relativement complexe, comme on peut le voir d'après les figures, une partie de la caisse étant représentée par des lignes en traits fantômes 14 dans les figures 2 et 3.

La pièce 10 est avantageusement moulée en matière synthétique polymère par le procédé R.I.M. (réaction injection molding), procédé qui consiste à mélanger les différents constituants d'une matière synthétique polymérisable dans une tête d'injection immédiatement en amont d'une cavité de moulage. Ce procédé présente l'avantage essentiel que la pression d'injection n'excède pas quelques bars dans le moule, la température d'injection étant de l'ordre de 40 à 80° C (ou davantage, en fonction des matières utilisées).

Les composants injectés dans le volume de moulage forment un mélange très fluide, permettant de remplir le volume de moulage en un temps très bref, de l'ordre d'une seconde environ.

La pièce 10 de carrosserie de la figure 1 doit être pourvue d'un joint d'étanchéité 16 le long de son bord supérieur, et il est préférable que ce joint soit continu, pour fournir une bonne étanchéité. En outre, il est avantageux que ce joint ait une forme et/ou une section évolutive, comme on le voit d'après la comparaison des figures 2 et 3.

Il est également souhaitable qu'il soit fixé de façon continue à la pièce 10, sur toute sa longueur et sur toute la surface de contact qu'il a avec la pièce 10, de façon à répondre aux sollicitations thermiques et mécaniques sensiblement comme cette pièce.

Selon l'invention, le joint 16 est réalisé en matière polymérisable telle qu'un polyuréthane ou une polyurée, et est surmoulé directement sur le bord supérieur de la pièce 10, pour être polymérisé au contact de cette pièce et être fixé à celle-ci par liaison chimique ou par affinité chimique de la matière polymérisable du joint 16 et de la matière polymère de la pièce 10.

Bien entendu, le joint 16 peut être surmoulé sur la pièce 10 par procédé R.I.M., la pression d'injection étant de quelques bars, la température d'injection dans le moule de 40 à 80°C quand le joint est en polyuréthane ou polyurée, ce qui permet de remplir le volume de moulage du joint en 1 seconde environ, ou moins.

Le joint 16 et la pièce 10 peuvent être en matières polymères de même type ou compatibles entre elles ou être formés tous les deux d'une même matière ayant des duretés différentes pour le joint et pour la pièce.

Le joint peut être surmoulé sur la pièce 10 avant ou après peinture de celle-ci. Lorsqu'il est surmoulé avant peinture de la pièce, il peut alors être peint en même temps que la pièce, dans la même couleur, avec une peinture du type élastique. Lorsque la pièce est peinte avant surmoulage du joint, il n'en résulte pas de problème, la peinture étant en général du type polyuréthane bicomposant, ayant donc des affinités chimiques avec la matière du joint.

Si la pièce 10 est réalisée en polymère thermoplastique, sa surface de contact avec le joint subit une préparation spécifique avant le surmoulage du joint.

On voit, (figure 4) que, quand le bord supérieur 18 de la pièce 10 présente des changements de direction et/ou des changements de plan à angles vifs, comme c'est le cas dans les zones désignées par les références 20 et 22, le joint polymère 16, représenté par les lignes en traits fantômes, suit exactement le bord supérieur de la pièce 10, sans s'en écarter, lorsqu'il est surmoulé directement sur ce bord.

Le joint 16 peut recouvrir les deux faces du bord de la pièce, comme représenté dans les figures 2 et 3, ou bien une seule face de ce bord.

On peut ainsi surmouler sur les pièces 10, non seulement des joints d'étanchéité, mais également des joints de montage de deux pièces l'une sur l'autre.

## Revendications

1. Procédé de formation d'un joint d'étanchéité (16) sur une pièce de carrosserie (10) en matière synthétique, caractérisé en ce qu'il consiste à surmouler un joint (16) en une matière polymérisable telle qu'un polyuréthane ou une polyurée sur la pièce de carrosserie (10), et à polymériser la matière du joint au contact de la pièce (10), pour fixer le joint sur cette pièce par liaison ou affinité chimique de leurs matières constitutives.

2. Procédé selon la revendication 1, caractérisé en ce que le joint (16) est surmoulé sur la pièce de carrosserie (10) par procédé R.I.M.

3. Procédé selon la revendication 1 ou 2, caractérisé en ce qu'on surmoule le joint (16) de façon continue sur un bord de la pièce de carrosserie.

4. Procédé selon la revendication 3, caractérisé en ce que le joint est surmoulé sur une ou sur les deux faces opposées du bord précité de la pièce.

5. Procédé selon l'une des revendications 1 à 4, caractérisé en ce que le joint (16) est de forme et/ou de section évolutive.

6. Procédé selon l'une des revendications 1 à 5, caractérisé en ce que le bord de la pièce sur lequel on surmoule le joint (16) comprend des changements de plan et/ou des changements de direction (20,22) à angles vifs.

7. Procédé selon l'une des revendications 1 à 6, caractérisé en ce que la pièce de carrosserie est en matière polymère moulée par injection selon le procédé R.I.M.

## Patentansprüche

1. Verfahren zur Herstellung einer Dichtverbindung (16) an einem Karosserieteil (10) aus Kunststoff, **dadurch gekennzeichnet, daß** es das Anformen einer Dichtung (16) aus einem polymerisierbaren Material, wie Polyurethan oder Polyharnstoff, an dem Karosserieteil (10) und das Polymerisieren des mit dem Teil (10) in Kontakt stehenden Materials aufweist, um die Dichtung an diesem Teil durch chemische Bindung oder Affinität ihrer wesentlichen Bestandteile zu befestigen.

2. Verfahren nach Anspruch 1, **dadurch gekennzeichnet, daß** die Dichtung (16) an dem Karosserieteil (10) mittels eines R.I.M.-Verfahrens angeformt wird.

3. Verfahren nach Anspruch 1 oder 2, **dadurch gekennzeichnet, daß** die Dichtung (16) durchgehend an einem Rand des Karosserieteils angeformt wird.

4. Verfahren nach Anspruch 3, **dadurch gekennzeichnet, daß** die Dichtung an einer oder an zwei gegenüberliegenden Seiten des genannten Randes des Teils angeformt wird.

5. Verfahren nach einem der Ansprüche 1 bis 4, **dadurch gekennzeichnet, daß** die Dichtung (16) eine veränderbare Form oder einen veränderbaren Querschnitt besitzt.

6. Verfahren nach einem der Ansprüche 1 bis 5, **dadurch gekennzeichnet, daß** der Rand des Teils, an welchem die Dichtung (16) angeformt ist, Flächen- und/oder Richtungsänderungen (20, 22) unter stumpfen Winkeln aufweist.

7. Verfahren nach einem der Ansprüche 1 bis 6, **dadurch gekennzeichnet, daß** der Karosserieteil als Spritzguß gemäß dem R.I.M. -Verfahren aus einem Polymer hergestellt ist.

## Claims

1. A method of forming a sealing gasket (16) on a piece (10) of bodywork made of synthetic material, the method being characterized in that it consists in overmolding a gasket (16) of polymerizable material such as a polyurethane or a polyurea onto the piece (10) of bodywork, and in polymerizing the material of the gasket on contact with the piece (10) to fix the gasket to said piece by chemical affinity or bonding between their constituent materials.

2. A method according to claim 1, characterized in that the gasket (16) is overmolded onto the piece (10) of bodywork by the RIM technique.

3. A method according to claim 1 or 2, characterized in that the gasket (16) is overmolded continuously onto an edge of the piece of bodywork.

4. A method according to claim 3, characterized in that the gasket is overmolded onto one or both of the opposite faces of the above-mentioned edge of the piece.

5. A method according to any one of claims 1 to 4, characterized in that the gasket (16) is of continuously varying shape and/or section.

6. A method according to any one of claims 1 to 5, characterized in that the edge of the piece onto which the gasket (16) is overmolded comprises changes in plane and/or changes in direction (20, 22) at sharp angles.

7. A method according to any one of claims 1 to 6, characterized in that the piece of bodywork is made of a polymer material that is injection molded using the RIM technique.
